Europäisches Patentamt

(19) European Patent Office

Office européen des brevets

(11) Publication number: **0 241 590 B1**

## (12) EUROPEAN PATENT SPECIFICATION

(45) Date of publication of patent specification: **21.08.91**   (51) Int. Cl.⁵: **B29C 47/66**

(21) Application number: **86116920.9**

(22) Date of filing: **05.12.86**

(54) **Mixing mechanism for compounding filled plastics.**

(30) Priority: **18.04.86 JP 90388/86**

(43) Date of publication of application:
**21.10.87 Bulletin  87/43**

(45) Publication of the grant of the patent:
**21.08.91 Bulletin  91/34**

(84) Designated Contracting States:
**CH DE FR GB IT LI**

(56) References cited:
**EP-A- 0 048 590      DE-A- 2 133 456**
**DE-A- 3 242 708      FR-A- 2 267 196**
**FR-A- 2 287 830      GB-A- 2 036 575**
**GB-A- 2 163 088      US-A- 3 150 411**
**US-A- 3 174 185**

**SRC '85, PROCEEDING OF THE 8TH SCAN-
DINAVIAN RUBBER CONFERENCE, Copenha-
gen, 10th-12th June 1985, pages 836-854; J.P.
BERRY: "The application of the cavity trans-
fer mixer to rubber processing"**

(73) Proprietor: **Kishimoto Sangyo Company Ltd.**
**4-34, Fushimi-cho Higashi-ku**
**Osaka-shi Osaka(JP)**

(72) Inventor: **Ito, Kimimase**
**323-2, Sugahara-cho**
**Nara-shi Nara(JP)**
Inventor: **Moriwaki, Takeshi**
**12-11, 2-cho, Kaorigaoka-cho**
**Sakai-shi Osaka(JP)**

(74) Representative: **Gille, Christian, Dipl.-Ing. et al**
**Türk, Gille + Hrabal Patentanwälte Bruckner**
**Strasse 20**
**W-4000 Düsseldorf 13(DE)**

## Description

## BACKGROUND OF THE INVENTION

### The art to which the invention pertains

This invention relates to a new mixing/dispersing mechanism to be used for compounding of composite plastic materials and for injection molding of filled plastic parts without preliminary melt compounding, in which fillers, especially fine particle sized inorganic fillers, are dispersed into the plastics matrix in high concentration

### Prior Art

Reinforced plastics or filled plastics, namely compounds of inorganic and/or organic reinforcements or fillers with plastic materials, are widely used in many industrial applications.

Generally, such composite materials have been manufactured by melt compounding of reinforcements and fillers with neat plastic materials, occasionary with stabilizers, lubricants, dispersing agents, and colorants.

For the manufacturing of such composites, extruders such as single screw extruders, twin screw extruders, and many other types of compounding machine with intensive mixing mechanism have been used.

However, the use of prior devices gives many problems in manufacturing recently developed composite materials as described below, therefore, the solution have been required eagerly by the industries.

Recently, composite materials have become employed in many industrial/engineering applications, because of the developments in their performance such as mechanical properties, thermal properties, electrical properties, which is unattainable with prior plastic materials. Such composite materials include thermoplastics such a polypropylene, ABS, styrene-acrylonitril plastic, nylon, polybutylene terephthalate, polyethylene terephthalte, polycarbonate, reinforced with glass fiber and/or carbon graphite fiber, and such plastic materials filled with reinforcing fillers such as talc, high aspect ratio mica, Wollastonite, and fillers such as calcium carbonate.

Attentions taken into account when such composite plastics are manufactured include:

(1) Reinforcements should be compounded without suffered, such as breakage.

(2) Fillers and reinforcements having small particle size should be dispersed uniformly into the resin matrix.

The former attention is especially important in order to increase the mechanical strength of the composite materials. Because, as well known, the mechanical strength of the short fiber reinforced composite material depends on the aspect ratio (length to diameter ratio of fiber) of the reinforcement.

Furthermore, the recent requirements on the later attention has become increasingly severe, because, as the application of composite has expanded, composite materials have become employed as exterior or incorporated parts, besides mechanical parts or structural parts installed in the inside of the equipments.

When composite materials are employed in exterior parts and exterior structural parts, it is required that the molded parts exhibit uniform and smooth surface. For that reason, because fillers having smaller diameter, less than one micron for example, give smooth surface, it is the recent trend to employ smaller particle size fillers.

However, such fine particle fillers are generally composed of larger agglomerates of fine individual particles, therefore, intensive mixing/dispersing action should be repeated, otherwise, the larger agglomerates remain in the molded parts, result in the great decrease of commercial value of the molded parts. This defect is emphasized especially when the molded parts are fabricated by such processes as painting and metallizing.

Furthermore, the dispersion of fillers are affected by the shape of the particle. When the shape of the fillers is fibrous or platy, they tends to entangle or adhere each other, therefore the dispersion of agglomerates into individual particle become increasingly difficult.

In the prior art, single screw extruders have widely been employed for compounding above mentioned composite materials, and in addition, continuous coumpounding extruder described in U. S. Pat. No. 4,300,840 is proposed to improve single screw extruders, however, both of which possess great defects as mentioned below, therefore, they cannot comply with the recent requirements for manufacturing high quality composite materials.

GB-A-2163088 describes an extruder comprising coaxially aligning two kneading mechanisms, namely a first stage kneading portion for plasticating and kneading a solid material mixture and a second stage kneading portion for blending the polymer melt transferred from the first stage kneading portion or dispersing breakable fillers, such as glass fibers fed at downstream inlet 26 into the second stage kneading portion (4). Furthermore, the known device comprises other auxiliary portions such as feeding portions, constriction adjusting means, vent mechanisms etc. The first stage kneading portion comprises a so-called Banbury-type kneading mechanism, whereas the second kneading mechanism is in the form of a CTM-typ dispersing mixer aligned with the Banbury mixer. The Banbury mixer is provided with tipped blades to meet the material in the chamber (cylinder 9), the grooves on the inner wall of the cylinder preventing the slip of material on the surface. The grooves are continuous within the first stage cylinder.

The Problems to be Solved by this Invention

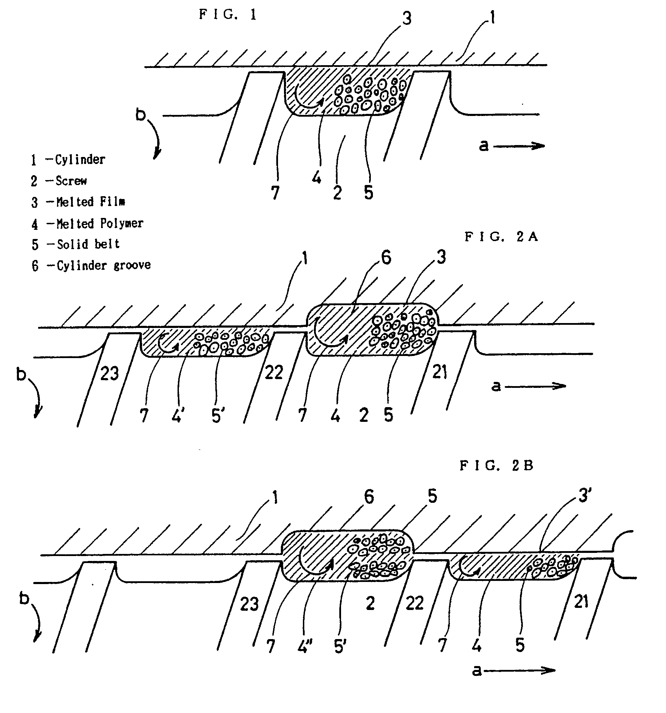

The plasticating/mixing mechanism of single screw compounding equipment is generally illustrated in Figure 1. The material plasticated mainly by the heat applied from the inside wall of the cylinder (1) forms a thin film (melt film) (3), which in turn, is scraped together by the front of the flight (nozzle side of the machine) of the rotating screw to form an accumulation of melt polymer or polymer melt (4). On that occation, unmelted polymer and fillers remain on the rear side of the preceding fright to form a solid bed (5).

The general means for obtaining uniform polymer melt is, that the channel depth of the screw is so designed to be gradually shallower to generate greater shearing force, which in turn circulates the polymer polymer melt (4) to melt the solid bed (5). However, in order to yield uniform dispersion of fillers, longer plasticating section is required, and in addition, the greater shearing force breaks the reinforcements while they travel through the section, result in to decrease the strength of the resultant composite.

The kneading equipment described in U. S. Pat. No. 4,300,840, which directed to improve the above mentioned kneading equipment, is explained to plasticate the resin by the shearing force generated by the screw rotation between the screw flight top and the inside wall of the cylinder, and in addition, plural of continuous grooves are formed inside of the cylinder, and the kneading of material is made by cutting and folding the material between the grooves and the screw channels.

Although this mechanism seems to be effective, however, only relatively little improvement is imparted relating to uniform dispersion of fillers into the resin matrix. The reason is, that the filler particles entered in a groove travel through the lengthwise direction in the groove by the force generated by the screw rotation, and passes by the kneading section without being subjected to the change of shearing action, consequently the agglomerated particles offten remain in the resultant composite materials and the molded parts.

As previously described, the improvement of prior art has become eagerly desired because the increasing severe requirement in terms of the appearance of molded parts, as well as the mechanical performance, made of composite material is now required by the industry.

In replying to the requirement, the inventors have directed to develop a dispersing mechanism for manufacturing composite materials which enables uniform dispersion of fine filler particles with higher loading and excellent reinforcing effect to the composite material to be used for external parts, result in to accomplish this invention of a new mixing mechanism described below.

**DETAILED DESCRIPTION OF THE INVENTION**

The mixing/dispersing mechanism of this invention enables roughly mixed powder blend of fillers to be finely and uniformly dispersed into the resin matrix under relatively lower pressure.

Namely, the inventors have developed a new mixing/dispersing mechanism constructed by installing plural of grooves in the inside wall of a cylinder in zigzag arrangement. This mechanism perfectly solves the defect frequently encountered in the prior art in which fillers pass by the groove and are discharged from the kneading section in agglomerated state.

The details of the construction and the action of the mixing/dispersing mechanism relating to this invention are described below.

In this mechanism, although the process of heating and plasticating of polymer is same as the prior art of single screw type plasticating/kneading mechanism, the feature of which is that plural of relatively short grooves are installed on the inside wall of the plasticating/mixing section of the cylinder in zigzag arrangement.

The action of the groove is, as illustrated in Figure 2A, that polymer melt (4) is produced in the same manner of previously mentioned general type single screw plasticating/kneading equipment, however, a part of which intrude into the relatively short groove (6) on the inside wall of the cylinder. This polymer melt (4), a solid bed is included in the center of which, is then bisected by the top of the flight (22) as the screw rotates, and the bisected half of which remained in the groove combines with the polymer melt (4') send by the screw flight (23), to form a new polymer melt (4") in which two solid beds (5)(5') are included.

In such a manner that solid bed is bisected and suspended in the polymer melt, it is easily understandable that the solid bed is easily melted by the action of the shearing force generated by the screw rotation. More precisely, the shearing force generated by the screw rotation circulates the polymer melt (4") following the arrow (7), and the solid bed (5) is mixed into the polymer melt, coincides with the breakage of agglomerates of filler to disperse into fine individual particle.

The polymer melt (4) in the screw channel forwarded by the screw flight (22), is heated by the cylinder, and solid bed (5) melts to form a new melt film (3'). Because, bisected solid bed (5) is heated directly by the inside wall of the cylinder in such a manner, plasticating becomes more rapid over a conventional single screw mechanism (Figure 1).

The repeated action rapidly transforms rough powder blend into fine melt mixture, therefore, the breakage of reinforcement is necessarily reduced, because the reinforcement is mixed within a short time, and in addition, there is no use to apply greater shearing force.

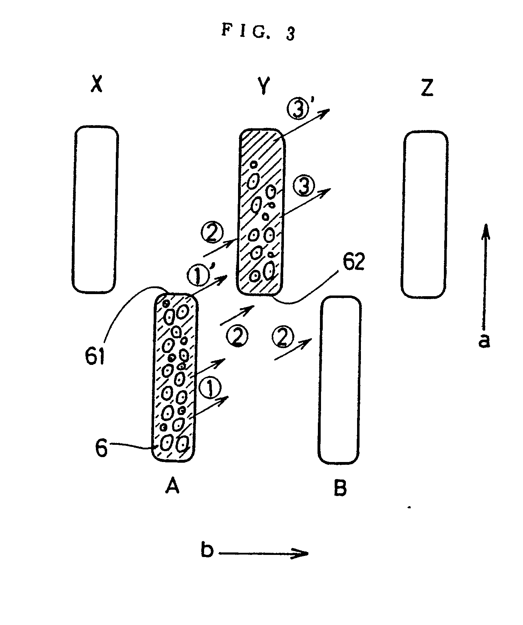

The relatively short grooves (6) on the inside wall of the cylinder (2) is installed in zigzag arrangement as illustrated in Figure 3. As previously mentioned, the rough mixture intruded in the groove A is pushed out toward direction ① as a new mixture intrude the groove A, on that occation, it is bisected by the top of the flight. Meanwhile, the rough mixture travelling toward the machine direction pour out as it reaches the end of groove A (61), on that occation, it is necessarily bisected and is remixed.

This material travels towards ① by the rotation of the screw, intruding groove Y and/or groove B as shown by arrow ② , in which polymer melt is remixed and is bisected as it pour out toward ③

Namely, by using this mixing mechanism, there is no occation that filler particles pass by the groove and is discharged out of the plasticating/mixing equipment in agglomerated condition, on the contrary to the prior art.

Because the mechanism of this invention works very efficiently over prior art, another advantage of which is that the mixing section can be designed shorter in machine direction.

The length of the grooves installed in zigzag arrangement lies within the range of 0.3 to 3.0, preferably 0.5 to 1.5 in regard to the corresponding screw pitch, for giving desirable dispersing effect. The grooves may be installed in two to six rows in axial (machine) direction. Generally two rows is sufficient for easily dispersable fillers such as chopped glass fiber, and four to six rows is necessary for hard-to-disperse fine fibrous fillers such as Wollastonite, potassium titanate whisker, and stainless steel fiber.

Semi-circular, flat semi-circular, round cornered rectangular, and round cornered triangle shape can be employed as the profile of the groove, however, this invention is not restricted by the profile of the groove.

The width of the groove for giving desirable mixing effect is that the sum of the width of the groove in a section lies in the range of 10 to 50% against the circumference of the cylinder circle.

Wide range of screw design of prior art can be employed as the screw design to be used for corresponding cylinder design of this invention, including single helical screw, plural helical screw, and in addition, Dulmage type screw provides better cutting/mixing action because it has a number of flight. Furthermore, although pin type or gear type screw design have little or no propelling force, they give excellent cutting/mixing effect when they are combined with helical screw design.

The grooves (6) installed in zigzag arrangement on the inside wall of the cylinder are spaced at nearly regular intervals of the circumference of the cylinder. For machine direction, the beginning of later groove (62) is so arranged as to be nearly equal or slightly overlapped position to the end of the preceding groove (61) in order to give the dispersing effect completely.

Helical angle of the helical screw is generally designed to approximately 20° so as to give maximum thoughput, in that occation, the grooves give maximum cutting effect when they are installed in parallel to the helical angle.

When the helical angle of the short grooves installed in the inside wall of the cylinder is designed smaller than the helical angle of the screw, the material travels toward reverse direction in the groove, result in to prolong the residence time in the cylinder. This design is effective for complete dispersion of hard-to-disperse fine fibrous fillers.

The cylinder having the above mentioned mixing mechanism can be composed by stacking short cylinder parts having one to two rows of grooves in lengthwise direction of the machine, to compose a complete cylinder assembly.

This construction is advantageous in that cylinder having optimum dispersing capability for each filler can be made by exchanging a part of the cylinder. However, the mixing mechanism of this invention is not restricted by this construction.

The mixing mechanism of this invention is most suitable for manufacturing composite material of high filler loading, and by employing the mechanism for plasticating and mixing section of extruders and injection molding machine for manufacturing filled plastics, excellent molded parts having uniform dispersion of fillers could be produced.

The Effect of the Invention

As previously described, this new invention possesses excellent industrial afvangate in that it enables manufacturing of high quality composite materials and also extruded or injection molded composite parts, having complete filler dispersion, especially in the case of high loading of fine particle sized inorganic fillers in plastic matrix, which is capable of being employed for external parts.

## DESCRIPTION OF THE DRAWINGS

Figure 1 is the section of prior single screw mixing mechanism.

Figure 2 is the section of the mixing mechanism relating to this invention.

Figure 3 is the part development figure of the cylinder grooves of this invention.

In these figures:

| | |
|---|---|
| 1. | Cylinder |
| 2. | Screw |
| 21,22,23 | Screw flights |
| 3,3′ | Melt films (3′ ...newly formed melt film) |
| 4,4′,4″ | Polymer melts |
| 5,5′ | Solid beds |
| 6 | Cylinder groove |
| 61 | End of cylinder groove |
| 62 | Beginning of cylinder groove |
| 7 | Circulating direction of polymer melt caused by the screw rotation |
| a | Direction of the travel of material |
| b | Rotating direction of the screw |
| A, B, X, Y, Z | Grooves in zigzag arrangement |

## Claims

1. A melt compounding mechanism for dispersing fillers into resin matrix, said mechanism comprising a single cylinder barrel (1) and a rotating screw (2) having substantially continuous flight and extending throughout said cylinder (1) and is aligned with feed section, plasticating/mixing section and metering section in sequence,
**characterized** in that a plurality of grooves are arranged in a zigzag arrangement on the inner wall of the plasticating/mixing section of said cylinder (1).

2. A mixing mechanism as described in claim 1, **characterized** in that said plasticating/mixing section of the cylinder (1) is built by putting short cylinders together successively in the lengthwise direction, each of said cylinders having a plurality of grooves on the inner wall in a zigzag arrangement.

3. A mixing mechanism as described in claim 1 or 2, **characterized** in that the sum of the width of said groove arranged in cross section of said plasticating/mixing section of the cylinder (1) lies within the range of 10 to 50 % against the entire circumference of the inner cylinder circle.

4. An injection molding machine for filled plastics in which the mixing mechanism described in one of claims 1, 2 or 3 is used as a mixing mechanism.

## Revendications

1. Mécanisme de compoundage d'une masse fondue pour disperser des charges dans une matrice de résine, ledit mécanisme, qui comprend un tambour cylindrique (1) et une vis rotative (2) possédant un filet sensiblement continu, s'étendant à l'intérieur de l'ensemble dudit cylindre (1), et est aligné avec une section d'alimentation, une section de plastification/mélange et une section de dosage, disposées les unes à la suite des autres, caractérisé en ce qu'une pluralité de gorges sont ménagées selon une disposition en zigzag dans la paroi intérieure de la section de plastification/mélange dudit cylindre (1).

2. Mécanisme de mélange selon la revendication 1, caractérisé en ce que ladite section de plastification/mélange du cylindre (1) formée par réunion de courts cylindres disposés successivement dans la direction longitudinale, chacun desdits cylindres possédant une pluralité de gorges ménagées dans sa paroi intérieure selon une disposition en zig-zag.

3. Mécanisme de mélange selon la revendication 1 ou 2, caractérisé en ce que la somme de la largeur de ladite gorge ménagée dans la section transversale de ladite section de plastification/mélange du cylindre (1) se situe dans la gamme comprise entre 10 et 50 % de la circonférence complète du cercle intérieur du cylindre.

4. Machine de moulage par injection pour des plastiques chargés, dans laquelle on utilise comme mécanisme de mélange le mécanisme de mélange décrit dans l'une des revendications 1, 2 ou 3.

## Patentansprüche

1. Schmelzaufbereitungsvorrichtung zum Dispergieren von Füllstoffen in eine Kunstharzmatrix, wobei die Vorrichtung eine einzelne zylindrische Trommel (1) und eine sich drehende Schraube (2) mit im wesentlichen kontinuierlichem Schraubengang, welche sich durch den Zylinder (1) erstreckt und mit Zufuhrbereich, Plastifizier-/ Mischbereich und Dosierbereich in Folge ausgerichtet ist, aufweist,
**dadurch gekennzeichnet,** daß eine Vielzahl von Nuten in zickzackartiger Anordnung auf der Innenwand des Plastifizier-/Mischbereichs des Zylinders (1) vorgesehen ist.

2.　Mischvorrichtung nach Anspruch 1,
**dadurch gekennzeichnet,** daß der Plastifizier-/Mischbereich des Zylinders (1) aufgebaut ist, indem kurze Zylinder aufeinanderfolgend in Längsrichtung zusammengesetzt sind, wobei jeder der Zylinder eine Vielzahl von Nuten in zickzackartiger Anordnung auf der Innenwand aufweist.

3.　Mischvorrichtung nach Anspruch 1 oder 2,
**dadurch gekennzeichnet,** daß die Summe der Breite der Nut, die im Querschnitt des Plastifizier-/Mischbereichs des Zylinders (1) angeordnet ist, im Bereich von 10 bis 50% in bezug auf den gesamten Umfang des inneren Zylinderkreises liegt.

4.　Spritzgußmaschine für füllstoffhaltige Kunststoffe, bei der die in einem der Ansprüche 1, 2 oder 3 beschriebene Mischvorrichtung als Mischvorrichtung verwendet wird.

EP 0 241 590 B1

FIG. 1

1 — Cylinder
2 — Screw
3 — Melted Film
4 — Melted Polymer
5 — Solid belt
6 — Cylinder groove

FIG. 2 A

FIG. 2 B

7

FIG. 3